## Europäisches Patentamt

## European Patent Office

## Office européen des brevets

(19)

(11) Veröffentlichungsnummer : **0 066 006**
**B1**

(12) **EUROPÄISCHE PATENTSCHRIFT**

(45) Veröffentlichungstag der Patentschrift :
01.10.86

(21) Anmeldenummer : 81108041.5

(22) Anmeldetag : 07.10.81

(51) Int. Cl.⁴ : **H 04 B   3/23**

(54) Übersprech- u./o. Echo-Kompensationsschaltung.

(30) Priorität : 29.05.81 DE 3121545

(43) Veröffentlichungstag der Anmeldung :
08.12.82 Patentblatt 82/49

(45) Bekanntmachung des Hinweises auf die Patenterteilung : 01.10.86 Patentblatt 86/40

(84) Benannte Vertragsstaaten :
AT BE CH FR GB IT LI NL SE

(56) Entgegenhaltungen :
EP-A- 0 019 194
DE-B- 2 853 167
GB-A- 2 007 946
US-A- 3 426 281
US-A- 3 436 478
US-A- 4 024 358
ELECTRONICS AND COMMUNICATIONS IN JAPAN, Band 51-A, Nr. 7, August 1968, Seiten 10-18, Washington, USA, A. MIURA et al.: "Blockless echo suppressor"
PATENTS ABSTRACTS OF JAPAN, Band 4, Nr. 36(E-3)(518), 26. März 1980, Seite 147E3
PATENTS ABSTRACTS OF JAPAN, Band 4, Nr. 181(E-37)(663), 13. Dezember 1980

(73) Patentinhaber : Siemens Aktiengesellschaft Berlin und München
Wittelsbacherplatz 2
D-8000 München 2 (DE)

(72) Erfinder : Birth, Winfried, Dipl.-Ing.
Ostpreussenstrasse 81
D-8000 München 81 (DE)

**Beschreibung**

In Fernmeldesystemen können bei der Übertragung von Signalen lineare Signalstörungen entstehen, zu deren Beseitigung Kompensationsschaltungen eingesetzt werden können. Solche Störungen können z. B. in Fernmeldesystemen, in denen zur Überführung von Zweidrahtleitungen in vierdrähtige Leitungsabschnitte und umgekehrt Gabelschaltungen (Brückenschaltungen) vorgesehen sind, dadurch hervorgerufen werden, daß eine solche Gabelschaltung eine exakte Nachbildung der Eingangsimpedanz der Zweidrahtleitung enthalten müßte, um eine vollständige Entkopplung des von der Gabelschaltung abgehenden (Empfangs-) Zweigs des Vierdrahtleitungsabschnitts von dem bei der Gabelschaltung ankommenden (Sende-) Zweig des Vierdrahtleitungsabschnitts zu erzielen, wozu die Leitungsnachbildung im Einzelfall durch exakten Abgleich an die jeweilige Zweidrahtleitung angepaßt werden muß ; mit einer in der Praxis vielfach angewendeten Kompromißnachbildung, mit der man unterschiedlichen Leitungsimpedanzen Rechnung zu tragen sucht, vermag die Gabelschaltung, die dann eine von der jeweiligen Leitungsimpedanz abhängige endliche Sperrdämpfung aufweist, die Sende- und Empfangssignale nur begrenzt voneinander zu entkoppeln. Auf der anderen Seite können auch bei optimalem Abgleich der Gabelschaltung Echos des eigenen Sendesignals, die durch auf der Zweidrahtleitung vorhandene Reflexionsstellen hervorgerufen werden, nicht ohne weiteres unterdrückt werden.

Zur Eliminierung oder zumindest Verringerung solcher Übersprech- u./o. Echosignale ist es (aus DE-AS 29 20 575) bekannt, eine Kompensationsschaltung vorzusehen, die ein dem zeitlichen Verlauf des Störsignals nachgebildetes Kompensationssignals erzeugt und von dem im Empfangszweig des Vierdrahtleitungsabschnitts auftretenden Empfangssignalgemisch subtrahiert, wobei die Kompensationsschaltung einen Momentanwerte des Kompensationssignals codiert speichernden Kompensationsignalspeicher aufweist, der bei einer über eine Ansteuerschaltung bewirkten Ansteuerung auf jeden Sendesignalimpuls hin die einzelnen Momentanwerte in ihrer codierten Darstellung einem Digital/Analog-Wandler (Decoder) zuführt, welcher daraus das vom Empfangssignalgemisch zu subtrahierende Kompensationssignal bildet. Die erforderlichen Kompensationssignalelemente können bei der Installation bzw. Inbetriebnahme des betreffenden Fernmelde-Systems in einem extern angeschalteten Rechner errechnet und in den Kompenstionssignalspeicher eingeschrieben werden ; vorzuziehen sein mag indessen ein anderer Weg, nämlich das Störsignal, das auf einen im ankommenden Vierdrahtleitungszweig (zweckmäßigerweise jeweils bei einem (Wieder-) Anschalten der (Fern-) Speisespannung an die Übertragungsschaltung) erzeugten jeweils ersten Sendesignalimpuls hin im abgehenden Vierdrahtleitungszweig auftritt, quantiziert und Δ-codiert in Form des so erhaltenen ΔM-Signals in den zweckmäßigerweise durch ein Umlaufregister gegebenen Kompensationssignalspeicher einzuschreiben und es daraus auf nachfolgende Sendesignalimpulse hin jeweils als Kompensationssignal wieder auszulesen (DE-A-31 16 863, veröffentlicht am 11.11.82 ; entsprechend EP-A-0 063 638, veröffentlicht am 3.11.82).

Durch die Subtraktion des gespeicherten Kompensationssignals von dem die eigentlichen Empfangssignalimpulse sowie Echo- u./o. Übersprechsignale enthaltenden Empfangssignalgemisch soll erreicht werden, daß die Augenöffnung der über die Zweidrahtleitung empfangenen Signalimpulse auch bei größtzulässiger Leitungslänge noch erhalten bleibt. Nimmt man dazu an, daß die Echo- u./o. Übersprechsignalamplitude maximal 10 % der — kleinstmöglichen — Empfangssignalamplitude betragen darf, der Störsignalpegel also um 20 dB unter dem Nutzsignalpegel liegen soll, so muß die Entkopplung zwischen ankommendem (Sende-) Vierdrahtleitungszweig und abgehendem (Empfangs-) Vierdrahtleitungszweig beispielsweise bei einer größtzulässigen Leitungsdämpfung von 40 dB einen Wert von 60 dB erreichen. Demgegenüber kann aber der größtmögliche Echo- u./o. Übersprechsignalpegel — mit einer gewissen Abhängigkeit von Echodämpfung, Stoßstellenentfernung und Nyquistfrequenz — in einer Größenordnung von beispielsweise nur etwa 18 dB unter dem (eigenen) Sendesignalpegel liegen, und der darüberhinausgehende Pegelabstand von im Beispiel 42 dB muß dann durch das Kompensationssignal geschaffen werden, das dazu hinreichend genau dem Störsignal (Echo- u./o. Übersprechsignal) entsprechen muß. Diese Genauigkeit — und damit das Ausmaß der Störsignaldämpfung — ist abhängig von der Speicherkapazität des Kompensationssignalspeichers ; so kann für ein das Kompensationssignal in ΔM-Darstellung speicherndes Umlaufregister eine Speicherkapazität etwa in der Größenordnung von 10 000 Bit zur Speicherung eines eine Störsignaldämpfung von im Beispiel 42 dB gewährleistenden Kompensationssignals erforderlich sein, wobei das Umlaufregister zugleich mit einer hohen, etwa im 100-MHz-Bereich liegenden Taktfrequenz arbeiten muß.

Die Erfindung stellt sich nun die Aufgabe einer Kompensationssignalspeicherung mit geringerem Speicheraufwand und zugleich geringeren Geschwindigkeitsanforderungen an den Kompensationssignalspeicher.

Die Erfindung betrifft ein Digital-Fernmeldesystem mit einer zwischen einem Vierdrahtleitungs-Sendezweig, insbesondere dem bei einer Gabelschaltung ankommenden Vierdrahtleitungszweig, und einem Vierdrahtleitungs-Empfangszweig, insbesondere dem von der Gabelschaltung abgehenden Vierdrahtleitungszweig, vorgesehenen Übersprech- u./o. Echo-Kompensationsschaltung mit einem nach Maßgabe von im ankommenden Vierdrahtleitungszweig auftretenden Sendesignalimpulsen ansteuerbaren Kompensationssignalspeicher, in den das Übersprech- u./o. Echosignal, das aus einem im ankommenden Vierdrahtleitungszweig auftretenden Sendesignal resultierend im abgehenden Vierdrahtleitungszweig auftritt, eingeschrieben ist, um daraus während einer Signalübertragung auf jeden Sendesignalimpuls hin als Kompensationssignal ausgelesen zu werden ; ein solches Digitalsystem ist erfindungsgemäß dadurch gekennzeichnet, daß der Kompensationssignalspeicher eine Mehrzahl von Umlauf-Schieberegistern jeweils mit einer Umlaufzeit gleich einem n-fachen (mit n = 1, 2, 3...) einer Übertragungssignal-Bitzeitspanne und einer entsprechenden Anzahl n von in jeweils einer Übertragungssignal-Bitzeitspanne entsprechenden Abständen aufeinanderfolgenden Ausgängen, die durch eine nachfolgende Bewertungs- und Additionsschaltung zusammengefaßt sind, aufweist, in die im Verlauf einer Serie von isolierten Sendesignalimpulsen gewonnene Teilkompensationssignale eingeschrieben sind, wobei in das erste Umlauf-Schieberegister das unmittelbar einem Sendesignalimpuls entsprechende Echo- u./o. Übersprechsignal quantisiert und codiert als Teilkompensationssignal eingeschrieben ist und in die nachfolgenden Umlauf-Schieberegister sukzessive jeweils das durch das (die) bereits in ein Umlauf-Schieberegister eingeschriebene(n) Teilkompensationssignal(e) teilkompensierte Echo- u./o. Übersprechsignal als weiteres Teilkompensationssignal eingeschrieben ist.

Die Erfindung bringt den Vorteil einer wesentlichen Verringerung der für eine gewünschte Störsignaldämpfung erforderlichen Kompensationssignalspeicherkapazität beispielsweise etwa auf ein Dreissigstel der bei Verwendung eines einzigen Umlaufregisters erforderlichen Speicherkapazität und, damit verbunden, eine entsprechende Verringerung des Speisestrombedarfs sowie eine Reduzierung der erforderlichen Taktfrequenz etwa um zwei Größenordnungen mit sich, wobei gleichzeitig eine hohe Kompensationsgenauigkeit ermöglicht ist.

Dabei können in weiterer Ausgestaltung der Erfindung jeweils im Verlauf einer Teilserie von isolierten Sendesignalimpulsen jeweils einem Sendesignalimpuls entsprechende, ggf. bereits teilkompensierte, aufeinanderfolgende Echo- u./o. Übersprechsignale zu in einem jeweils gleichen Abtastraster aufeinanderfolgenden Abtastzeitpunkten abgetastet werden und die quantisierten Echo- u./o. Übersprechsignalwerte codiert sukzessive zur Bildung des jeweiligen Teilkompensationssignals in das jeweilige Umlauf-Schieberegister eingeschrieben werden. Bei einer solcherart ausgestalteten Störsignalerfassungsprozedur, bei der also jedes einem Sendesignalimpuls entsprechende Echo- u./o. Übersprechsignal nur zu einem einzigen Abtastzeitpunkt abgetastet wird, wobei im Verlauf einer (Teil-) Serie von — grundsätzlich untereinander gleichen — Echo- u./o. Übersprechsignalen der Abtastzeitpunkt auf dem Echo- u./o. Übersprechsignal-Kurvenzug schrittweise weiterwandert, kann eine A/D-Wandlung des gesamten Kurvenzuges in Echtzeit vermieden werden.

Zweckmäßigerweise wird dabei in weiterer Ausgestaltung der Erfindung jeweils eine Mehrzahl von aufeinanderfolgenden Echo- u./o. Übersprechsignalen zu ein und demselben Abtastzeitpunkt des jeweiligen Abtastrasters abgetastet, und es wird ein aus den abgetasteten Echo- u./o. Übersprechsignalwerten gebildeter Mittelwert codiert zur Bildung des jeweiligen Teilkompensationssignals in das jeweilige Umlauf-Schieberegister eingeschrieben ; dies gestattet es, etwaige Fremdstörungen bei der Kompensationssignalbildung zu eliminieren.

Vorzugsweise wird das Echo- u./o. Übersprechsignal Δ-codiert und in Form des so erhaltenen ΔM-Signals als Teilkompensationssignal in das jeweilige Umlauf-Schieberegister eingeschrieben ; damit wird eine besonders einfache Ausbildung der Kompensationsschaltung ermöglicht.

So kann in vorteilhafter Weise zu der genannten Mittelwertbildung die aufeinanderfolgend zu ein und demselben Abtastzeitpunkt des jeweiligen Abtastrasters gewonnene Mehrzahl von ΔM-Bits einem zunächst in Mittelstellung befindlichen Vorwärts-Rückwärtszähler zugeführt werden, dessen dabei erreichter, dem Echo- u./o. Übersprechsignal-Mittelwert entsprechender Zählerstand das zur Bildung des jeweiligen Teilkompensationssignals in das jeweilige Umlauf-Schieberegister einzuschreibende ΔM-Bit bestimmt.

In weiterer Ausgestaltung der Erfindung kann bei bekannter Beziehung zwischen Sendesignaltakt und Empfangssignaltakt die Abtastschrittweite, mit der sich bei der Δ-Codierung der Abtastzeitpunkt im Verlauf einer (Teil-) Serie von Echo- u./o. Übersprechsignalen schrittweise verschiebt, in der näheren Umgebung der Entscheidungszeitpunkte für Empfangssignalimpulse kleiner sein als in der Mitte zwischen zwei solchen Entscheidungszeitpunkten. Dies ermöglicht entsprechend kürzere Umlauf-Schieberegister und, daraus resultierend, einen entsprechend geringeren Stromverbrauch der Kompensationsschaltung, ohne indessen die zu den Zeitpunkten, zu denen das Empfangssignal abgetastet wird, erforderliche Kompensationsgenauigkeit zu beeinträchtigen.

Die für die Kompensationsgenauigkeit bedeutsame Genauigkeit, mit der das Echo- u./o. Übersprechsignal zur Kompensationssignalbildung A/D-gewandelt wird, wird durch Prädiktion erhöht, wenn bei der Bildung eines Teilkompensationssignals in einem Umlauf-Schieberegister bereits ein Teilkompensationssignal geringerer Genauigkeit vorhanden ist. Zweckmäßigerweise wird daher in weiterer Ausgestaltung der Erfindung die Einschreibung eines Teilkompensationssignals in ein Umlauf-Schieberegister mindestens einmal wiederholt, bevor ein Teilkompensationssignal in das nachfolgende Umlauf-Schieberegister eingeschrieben wird.

Des weiteren ist auch die Möglichkeit eröffnet, selbst bei einer (etwa bei sehr langen Leitungen) nicht mehr zu vernachlässigenden Drift von Leitungsparametern während des Übertragungsbetriebs die Kompensationsgüte zu bewahren, indem in weiterer Ausgestaltung der Erfindung die Einschreibung des Teilkompensationssignals in das letzte Umlauf-Schieberegister ständig wiederholt wird.

Die Teilkompensationssignale können in weiterer Ausgestaltung der Erfindung jeweils bei einem Anschalten der (Fern-) Speisespannung an das Digital-Fernmeldesystem neu gebildet und eingespeichert werden; hiermit kann in zweckmäßiger Weise der Möglichkeit einer Unterbrechung des Speisestromkreises und eines daraus resultierenden Verlustes des bis dahin gespeicherten Kompensationssignals, etwa aufgrund einer Leitungsumrangierung bei einer Vermittlungsstelle oder eines Umsteckens des Teilnehmerapparates von einer Anschlußsteckdose an eine andere bei einer Teilnehmerstelle, Rechnung getragen werden.

Weitere Ausgestaltungen der Erfindung werden aus der nachstehenden näheren Erläuterung der Erfindung anhand der Zeichnungen ersichtlich. Dabei zeigt

Figur 1 ein Ausführungsbeispiel eines Digital-Fernmeldesystems mit einer Störsignal-Kompensationsschaltung gemäß der Erfindung;

Figur 2 verdeutlicht weitere schaltungstechnische Einzelheiten.

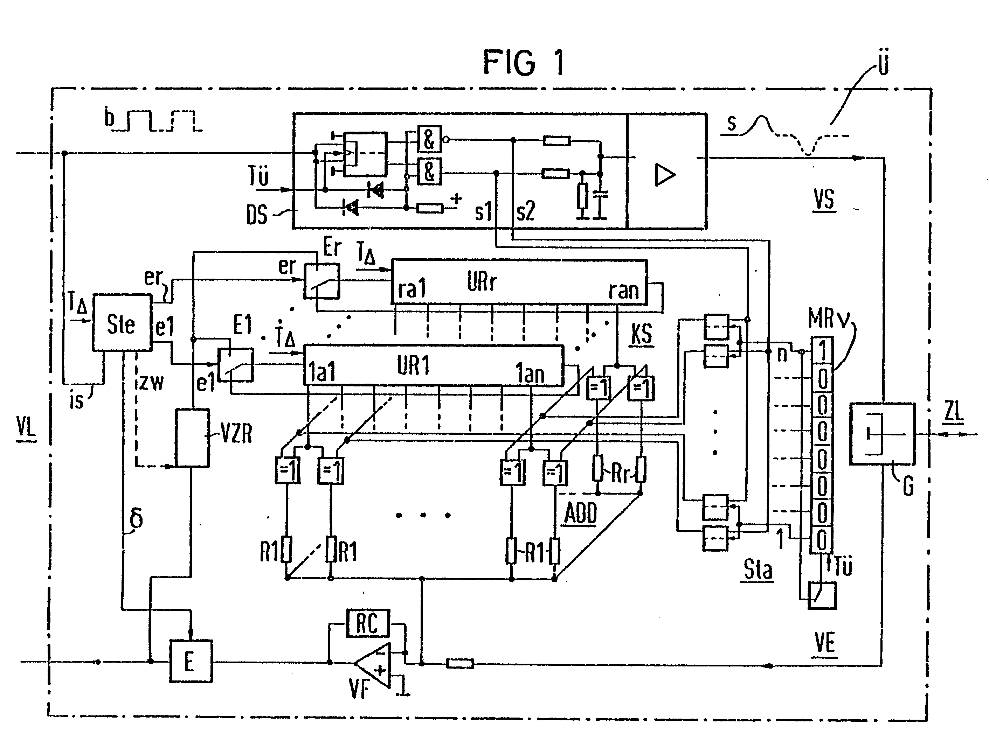

In der Zeichnung Fig. 1 ist schematisch in einem zum Verständnis der Erfindung erforderlichen Umfang ein Digital-Fernmeldesystem mit einer zwischen einem Vierdrahtleitungsabschnitt VL und einem Zweidrahtleitungsabschnitt ZL liegenden Übertragungsschaltung Ü dargestellt, wobei es sich bei der Zweidrahtleitung ZL und der Übertragungsschaltung Ü um eine Zweidraht-Teilnehmeranschlußleitung und deren teilnehmerseitigen oder vermittlungsstellenseitigen Abschluß handeln kann. In der Übertragungsschaltung Ü liegt zwischen dem Vierdrahtleitungsabschnitt VL und dem Zweidrahtleitungsabschnitt ZL eine Gabelschaltung G.

Der Vierdrahtleitungsabschnitt VL weist in seinem bei der Gabelschaltung G ankommenden Sendezweig VS eine Digitalsignal-Sendeschaltung DS zum Aussenden von Sendesignalimpulsen s vorgegebener Form bzw. mit einem vorgegebenen Schwerpunkt ihres Frequenzspektrums auf; in Fig. 1 ist dazu angedeutet, daß die Sendeschaltung DS ihr zugeführte Binärsignalimpulse b in AMI-Signalimpulse s umsetzen möge.

In seinem von der Gabelschaltung G abgehenden Empfangszweig VE weist der Vierdrahtleitungsabschnitt VL eine Digitalsignal-Empfangsschaltung mit einer Filter- und Verstärkerschaltung VF und einem Amplitudenentscheider E auf; der Amplitudenentscheider E kann, ohne daß dies in Fig. 1 näher dargestellt ist, mit einem Empfangssignalwandler verbunden sein, der ihm zugeführte Signalimpulse beispielsweise in entsprechende Binärsignale umsetzen möge, wobei bei Zugrundelegung der in Fig. 1 angedeuteten Signalformen ein solcher Empfangssignalwandler im Prinzip mit einer Gleichrichterschaltung realisiert sein kann.

Die Sendesignalimpulse s gelangen vom Sendezweig VS des Vierdrahtleitungsabschnitts VL über die Gabelschaltung G zur Zweidrahtleitung ZL, über die sie zu der in Fig. 1 nicht näher dargestellten Gegenstelle des Digital-Fernmeldesystems übertragen werden; in umgekehrter Übertragungsrichtung gelangen von der Gegenstelle herrührende, über die Zweidrahtleitung ZL übertragene Signalimpulse über die Gabelschaltung G als Empfangssignalimpulse zum Empfangszweig VE des Vierdrahtleitungsabschnitts VL. Weist die Zweidrahtleitung ZL Reflexionsstellen auf, wie sie durch Stellen sprunghafter Änderungen von Leitungsparametern gegeben sein können, so gelangen außer den eigentlichen Empfangssignalimpulsen aber auch Echos der Sendesignalimpulse s zum Empfangszweig VE des Vierdrahtleitungsabschnitts VL, und außerdem können bei begrenzter Gabelsperrdämpfung auch direkt Anteile der Sendesignalimpulse s in den Empfangszweig VE gelangen. Im Empfangszweig VE tritt dann jeweils ein Empfangssignalgemisch aus den eigentlichen Empfangssignalimpulsen und einem Echo- u./o. Übersprechsignalen zusammengesetzten Störsignal auf. Dieses Störsignal ist zu kompensieren.

Zur Kompensation eines solchen Störsignals ist in der Übertragungsschaltung Ü nach Fig. 1 zwischen dem ankommenden Vierdrahtleitungszweig VS und dem abgehenden Vierdrahtleitungszweig VE eine Übersprech- u./o. Echo-Kompensationsschaltung mit einem nach Maßgabe von im ankommenden Vierdrahtleitungszweig VS auftretenden Sendesignalimpulsen s ansteuerbaren Kompensationssignalspeicher KS vorgesehen, in dem das Übersprech- u./o. Echosignal, das aus einem im ankommenden Vierdrahtleitungszweig VS auftretenden Sendesignalimpuls s resultierend im abgehenden Vierdrahtleitungszweig VE auftritt, eingeschrieben ist, um daraus während einer Signalübertragung auf jeden Sendesignalimpuls s hin als Kompensationssignal ausgelesen zu werden. Die Kompensation von Störsignalen durch aus einem Kompensationssignalspeicher ausgelesene Kompensationssignale ist an sich (z. B. aus der bereits genannten DE-B-29 20 575 oder der bereits genannten DE-A-31 16 863) bekannt, so daß sich insoweit weitere Erläuterungen dazu erübrigen.

Der Kompensationssignalspeicher KS gemäß Fig. 1 weist eine Mehrzahl r von Umlaufspeichern UR1; ...; URr, vorzugsweise jeweils in Form eines zu einem Ring geschlossenen sog. Umlauf-Schieberegisters, auf, deren Umlaufzeit jeweils gleich einem n-fachen (mit n = 1, 2, 3 ...) der Übertragungsschrittdauer (Übertragungssignal-Bitzeit-

spanne) $\tau_{\ddot{u}}$ ist und die jeweils eine entsprechende Anzahl n von in jeweils einer Übertragungsschritt-dauer (Übertragungssignal-Bitzeitspanne) $\tau_{\ddot{u}}$ entsprechenden Abständen aufeinanderfolgenden Ausgängen 1a1 ... 1an ; ... ; ra1 ... ran aufweisen ; beispielsweise können r = 4 Umlauf-Schieberegister UR mit jeweils n = 8 Ausgängen vorgesehen sein. Die Ausgänge 1a1 ... 1an ; ... ; ra1 ... ran werden durch eine nachfolgende Bewertungs- und Additionsschaltung ADD zusammengefaßt, die, wie dies auch in Fig. 1 angedeutet ist, von einer Steuereinrichtung Sta angesteuerte EXCLUSIV-ODER-Glieder mit einem nachfolgenden Widerstandsnetzwerk aufweisen kann, dessen Widerstände $R_1$ ; ... ; Rr von Umlauf-Schieberegister UR1, ... zu Umlauf-Schieberegister ... ; URr entsprechend dem jeweiligen Beitrag zur Störsignalkompensation beispielsweise nach der Vorschrift $Rr = 5^{r-1} \cdot R1$ abgestufte Widerstandswerte aufweisen. Die Bewertungs- und Additionsschaltung ADD führt zum Empfangszweig VE des Vierdrahtleitungsabschnitts VL, um in diesen jeweils das erforderliche Kompensationssignal einzukoppeln.

In die Umlauf-Schieberegister UR1 ; ... ; URr sind dazu im Verlauf einer Serie von isolierten Sendesignalimpulsen gewonnene Teilkompensa-tionssignale eingeschrieben, wobei das Kom-pensationssignal zweckmäßigerweise, wie dies auch schon an anderer Stelle (DE-A-31 16 817, veröffentlicht am 11.11.82) angegeben wird, jeweils bei einem Anschalten der (Fern-) Speisespannung an das Digital-Fernmeldesystem neu gebildet und eingespeichert wird. Dabei ist in das erste Umlauf-Schieberegister UR1 das unmit-telbar einem Sendesignalimpuls (s) ent-sprechende Echo- u./o. Übersprechsignal quantisiert und (vorzugsweise Δ-) codiert als Teilkompensationssignal eingeschrieben ; in die nachfolgenden Umlaufschieberegister ... ; URr ist sukzessive jeweils das durch das (die) bereits in ein Umlaufschieberegister UR1 ; ... eingeschrie-bene(n) Teilkompensationssignal(e) teilkompensierte Echo- u./o. Übersprechsignal als weiteres Teilkompensationssignal eingeschrieben.

Das Auslesen der den Kompensationssignalspeicher KS bildenden Umlauf-Schieberegister UR1 ; ... ; UR1 und die Bildung des jeweils benötigten Analog-Kompensationssignals wird von einer Steuereinrichtung Sta gesteuert, deren Steuerausgänge zu den EXCLUSIV-ODER-Gliedern führen, die zwischen die Ausgänge 1a1 ... 1an ; ... ; ra1 ... ran der Umlauf-Schieberegister UR1 ; ... ; URr und die abgestufte Widerstandsmatrix R1 ; ... ; Rr der Bewertungs- und Additionsschaltung ADD eingefügt sind. Eine solche Steuereinrichtung Sta kann, wie dies auch in Fig. 1 angedeutet ist, ein in gleicher Weise wie die Umlauf-Schieberegister UR1 ; ... ; UR1 ausgebildetes, im Unterschied dazu aber nicht mit dem Abtasttakt $T_\Delta$, sondern mit dem Übertragungs-schritttakt $T_{\ddot{u}}$ taktgesteuertes Umlauf-Schiebere-gister MRν mit im Beispiel wiederum n = 8 Ausgängen aufweisen, in welchem phasengleich mit den Anfängen der in den Umlauf-Schiebere-

gistern UR1 ; ... ; URr des Kompensationssignal-speichers KS gespeicherten Teilkompensa-tionssignale ein Steuerbit « 1 » umläuft und an dessen Ausgänge 1 ... n die Takteingänge jeweils zweier D-Kippglieder angeschlossen sind, zu deren D-Eingängen Sendesignalleitungen s1 und s2 aus der im Vierdraht-Sendeleitungszweig VS gelegenen, einen Leitungscodierer und Pulsformer enthaltenden Digitalsignal-Sendeschaltung DS geführt sind. Je nach dem, ob im Vierdrahtleitungs-Sendezweig VS ein AMI-Signal + 1, — 1 oder 0 auftritt, sind dann von den beiden D-Kippgliedern, die gerade vom Umlauf-Schiebere-gister MRν her durch das Steuerbit « 1 » entriegelt werden, beide aktiviert, beide nicht aktiviert oder die eine aktiviert und die andere nicht aktiviert, so daß aus den an den zugehörigen Ausgängen 1aγ ... raγ der Umlauf-Schieberegister UR1 ... UR1 auftretenden Δ-Bits unter dem Einfluß der von den D-Kippgliedern angesteuerten EXCLUSIV-ODER-Glieder in der Bewertungs- und Additionsschaltung ADD jeweils ein Analog-Signalelement mit geändertem Vorzeichen, mit unverändertem Vorzeichen oder ohne Vorzeichen (Null) abgeleitet und dem Vierdrahtleitungs-Empfangszweig VE als entsprechendes Teilkompensationssignal zugeführt wird, wobei die D/A-Wandlung durch Glättung im Empfangsfilter vollendet wird.

Die für die Umlauf-Schieberegister UR1 ; ... ; URr jeweils erforderliche Speicherkapazität ist relativ gering ; sie ist dabei von dem Abtasttakt $T_\Delta$ abhängig, mit dem das Echo- u./o. Übersprechsignal zur Kompensationssignalbildung abgetastet, quantisiert und (Δ-) codiert wird. Je höher die Abtastfrequenz ist, desto kleiner sind die Quantisierungsverzerrungen und desto größer ist die Kompensationsgenauigkeit ; dabei braucht indessen die Schiebetaktfrequenz $1/\tau_\Delta$ beispielsweise nur das 10-fache der Übertra-gungstaktfrequenz $1/\tau_{\ddot{u}}$ zu betragen, da, statt durch eine höhere Schiebetaktfrequenz den Quantisierungsfehler der ΔM-Darstellung gering zu halten, die Genauigkeit durch Nachkorrektur über weitere Umlauf-Schieberegister erzielt wird : Die Fehlerdämpfung steigt nur linear mit der Schiebetaktfrequenz, aber exponentiell mit der Anzahl der Umlauf-Schieberegister UR, so daß man statt eines sehr langen Registers nur wenige (z. B. r = 4) kurze Register benötigt, die langsam arbeiten können. Nimmt man im Beispiel eine Kompensation über jeweils n = 8 Sendesignal-Bitperioden (Übertragungsschritte) $\tau_{\ddot{u}}$ hinweg vor, so ergibt sich beispielsweise bei einer Übertragungsgeschwindigkeit von 80 kbit/s und — bei ΔM-Darstellung des Kompensationssignals — ei-nem 800-kHz-Abtasttakt $T_\Delta$ (entsprechend d = 10 Abtastungen je Übertragungsschritt) eine erforderliche Speicherkapazität von 80 Bit je Umlauf-Schieberegister UR, wobei die jeweils n = 8 Ausgänge jedes der Umlauf-Schieberegister UR1 ; ... ; URr gegenseitige Abstände von jeweils d = 10 Bit aufweisen.

Solche Umlauf-Schieberegister von untereinander gleicher Länge sind auch in Fig. 1 angedeutet ; es sei jedoch bemerkt, daß in Abweichung von der in Fig. 1 gegebenen Darstellung die einzelnen Umlauf-Schieberegister auch von unterschiedlicher Länge sein können, wobei sie insbesondere von Umlauf-Schieberegister (UR1 ; ... in Fig. 1) zu Schieberegister (... ; URr in Fig. 1) in ihrer Länge zunehmen können, wenn man Teilkompensationssignale zur Grobkompensation nur in sendesignalimpulsnahen Zeitbereichen vorsieht.

Zum Einschreiben der einzelnen Teilkompensationssignale · in die einzelnen Umlauf-Schieberegister UR1 ; ... ; UR1 sind deren Eingänge über von einer Steuereinrichtung Ste gesteuerte Einschreibschalter E1 ... Er der Reihe nach mit dem Vierdrahtleitungs-Empfangszweig VE verbindbar. Die Verbindung verläuft dabei prinzipiell über einen A/D-Wandler, in dem das jeweilige Echo- u./o. Übersprechsignal, das aus einem im Vierdrahtleitungs-Sendezweig VS auftretenden isolierten Sendesignalimpuls resultierend im Vierdrahtleitungs-Empfangszweig VE auftritt, von einem Analog- in ein Digitalsignal umgesetzt wird.

In der in Fig. 1 skizzierten Übertragungsschaltung Ü, in der das Echo- u./o. Übersprechsignal in ein ΔM-Signal umgesetzt wird und in der demzufolge ein entsprechender Δ-Codierer als A/D-Wandler vorzusehen ist, wird als Δ-Entscheider der im Vierdrahtleitungs-Empfangszweig VE ohnehin vorgesehene Empfangssignal-Amplitudenentscheider E mitausgenutzt, und der Rückführungszweig des Δ-Codierers wird mit dem Kompensationssignalspeicher KS und der nachfolgenden Bewertungs- und Additionsschaltung ADD gebildet.

Zwischen dem Ausgang des im Vierdrahtleitungs-Empfangszweig VE vorgesehenen Entscheiders E und die Umlaufspeicher-Einschreibschalter E1 ... Er ist in der Übertragungsschaltung Ü gemäß Fig. 1 noch ein Vorwärts-Rückwärts-Zähler VRZ eingefügt, mit dessen Hilfe bei Abtastung einer Mehrzahl von Echo- u./o. Übersprech-Signalen zu jeweils ein und demselben Abtastzeitpunkt des jeweiligen Abtastrasters, d. h. jeweils an derselben Stelle, aus der dabei erhaltenen Mehrzahl von ΔM-Bits ein Mittelwert gebildet wird, der dann zur Bildung des jeweiligen Teilkompensationssignals in das jeweilige Umlauf-Schieberegister UR eingeschrieben wird.

Zum Einschreiben der Teilkompensationssignale in die Umlauf-Schieberegister UR1 ; ... ; URr möge von der Steuereinrichtung Ste her über eine Steuerleitung is die Digitalsignal-Sendeschaltung DS zur Aussendung einer Serie von isolierten, d. h. voneinander bzw. von anderen, etwa von der Gegenstation ankommenden Signalimpulsen jeweils durch eine Vielzahl von « 0 »-Signalelementen getrennten Sendesignalimpulsen, im Beispiel AMI-Impulsen, veranlaßt werden, die von dem bei der Gabelschaltung G ankommenden Vierdrahtleitungs-Sendezweig VS über die Gabelschaltung G zur Zweidrahtleitung Z gelangen und auf dieser weiterübertragen werden. Auf jeden solchen Sendesignalimpuls hin tritt in dem von der Gabelschaltung G abgehenden Vierdrahtleitungs-Empfangszweig VE ein entsprechendes Echo- u./o. Übersprechsignal auf, dem am Eingang der Filter- und Verstärkerschaltung VF das von der Kompensationsschaltung KS, ADD jeweils abgegebene Kompensationssignal hinzugeführt wird, so ·daß dem Eingang des Entscheiders E das aus Echo- u./o. Übersprechsignal und Kompensationssignal resultierende Differenzsignal zugeführt wird.

Geht man davon aus, daß der Kompensationssignalspeicher KS zunächst gewissermaßen leer ist, daß in den Umlaufschieberegistern UR1 ; ... ; URr also jeweils ein — bei ΔM-Darstellung durch eine Folge von sich abwechselnden « 0 »- und « 1 »-Signalelementen gegebenes — Nullsignal gespeichert ist, so gelangt das aus einem ersten Sendesignalimpuls herrührende Echo- u./o. Übersprechsignal als solches, d. h. völlig unkompensiert, zu dem von der Steuereinrichtung Ste her über eine Steuerleitung 6 für einen ersten Abtastzeitpunkt entriegelten Entscheider E, der je nach dem betreffenden Abtastwert ein Signalelement « 0 » oder « 1 » an den zunächst in einer Mittelstellung befindlichen Vorwärts-Rückwärts-Zähler VRZ gibt.

In entsprechender Weise wird zunächst auch mit den aus einer Mehrzahl nachfolgender isolierter Sendesignalimpulse herrührenden Echo- u./o. Übersprechsignalen verfahren, wobei der dabei schließlich erreichte Zählerstand des Vorwärts-Rückwärts-Zählers VRZ dem zu dem betrachteten ersten Abtastzeitpunkt gegebenen Echo- u./o. Übersprechsignal-Mittelwert entspricht ; dieser Zählerstand bestimmt über einen nachfolgenden Schwellwertschalter das ΔM-Bit, das zu dem betrachteten ersten Abtastzeitpunkt über den zu diesem Zeitpunkt von der Steuereinrichtung Ste her entriegelten Einschreibschalter E1 in die erste Speicherzelle des ersten Umlauf-Schieberegisters UR1 einzuschreiben ist.

Anschließend werden die aus einer nachfolgenden Mehrzahl isolierter Sendesignalimpulse herrührenden Echo- u./o. Übersprechsignale in entsprechender Weise, jedoch — bei Zugrundelegung des gleichen Abtastrasters — zu einem über die Steuerleitung δ angegebenen zweiten Abtastzeitpunkt abgetastet, und es wird ein dem Abtastmittelwert entsprechendes ΔM-Bit über den von der Steuereinrichtung Ste her entsprechend entriegelten Einschreibschalter E1 in die zweite Speicherzelle des ersten Umlauf-Schieberegisters UR1 eingeschrieben.

In entsprechender Weise werden im Verlauf einer ganzen Teilserie von isolierten Sendesignalimpulsen die jeweils einem Sendesignalimpuls entsprechenden Echo- u./o. Übersprechsignale zu in dem jeweils gleichen Abtastraster nachfolgenden Abtastzeitpunkten abgetastet, und es werden die dabei gewonnenen quantisierten Echo- u./o. Übersprechsignal-Abtastwerte codiert sukzessive zur Bildung eines ersten Teilkompensationssignals in die nachfolgenden Speicherzellen des ersten Umlauf-Schieberegisters UR1 eingeschrieben.

Schließlich ist im ersten Umlauf-Schieberegister UR1 das gesamte unmittelbar einem Sendesignalimpuls entsprechende Echo- u./o. Übersprechsignal quantisiert und codiert als Teilkompensationssignal eingeschrieben. Dieses Teilkompensationssignal vermag gewissermaßen eine Grobkompensation des Echo- u./o. Übersprechsignals zu bewirken, durch die dieses eine entsprechende, größenordnungsmäßig etwa mit einem Term $20 \cdot \lg(d/2)$ — worin $d = \tau_{\ddot{u}}/\tau_\Delta$ gleich der Anzahl der Abtastschritte je Übertragungsschritt ist — zu beziffernde Dämpfung von im Beispiel 14 dB erfährt.

Nachdem so im Verlauf einer ersten Teilserie von isolierten Sendesignalimpulsen das unmittelbar einem Sendesignalimpuls entsprechende Echo- u./o. Übersprechsignal quantisiert und codiert als Teilkompensationssignal in das erste Umlauf-Schieberegister UR1 eingeschrieben worden ist, wird es bereits beim Laden des nächstfolgenden Umlauf-Schieberegisters zur Grobkompensation ausgenutzt :

Hierbei wird in entsprechender Weise im Verlauf einer zweiten Teilserie von isolierten Sendesignalimpulsen das daraus jeweils resultierende, nunmehr aber durch das im ersten Umlauf-Schieberegister UR1 eingespeicherte Teilkompensationssignal bereits teilkompensierte Echo- u./o. Übersprechsignal als zweites Teilkompensationssignal in eine zweites Umlauf-Schieberegister eingeschrieben. Dies geschieht in einer zu den zuvor erläuterten Vorgängen analogen Weise, so daß sich eine erneute Erläuterung erübrigt ; durch das zweite Teilkompensationssignal erfahren die — bereits teilkompensierten — Echo- u./o. Übersprechsignale dann eine zusätzliche Dämpfung von im Beispiel weiteren 14 dB.

In entsprechender Weise werden im Verlauf weiterer Teilserien von isolierten Sendesignalimpulsen weitere jeweils einem Sendesignalimpuls entsprechende, durch bereits eingeschriebene Teilkompensationssignale jeweils bereits teilkompensierte Echo- u./o. Übersprechsignale zu im jeweils gleichen Abtastraster aufeinanderfolgenden Abtastzeitpunkten abgetastet, und es werden die quantisierten Echo- u./o. Übersprechsignalwerte codiert sukzessive zur Bildung eines jeweils weiteren Teilkompensationssignals in ein jeweils weiteres Umlauf-Schieberegister UR eingeschrieben. Dies setzt sich solange fort, bis schließlich im Verlauf einer r-ten Teilserie von isolierten Sendesignalimpulsen in das r-te Umlauf-Schieberegister URr das durch die bereits in die vorangehenden Umlauf-Schieberegister UR1, ... eingeschriebenen Teilkompensationssignale teilkompensierte Echo- u./o. Übersprechsignal als letztes Teilkompensationssignal eingeschrieben ist.

Zusätzlich zu den vorstehend beschriebenen Vorgängen kann übrigens die Einschreibung eines Teilkompensationssignals in ein Umlauf-Schieberegister UR auch ein oder mehrmals wiederholt werden, bevor ein Teilkompensationssignal in das jeweils nachfolgende Umlauf-Schieberegister eingeschrieben wird, um so durch eine Prädiktion die Genauigkeit des jeweils eingespeicherten Teilkompensationssignals zu erhöhen.

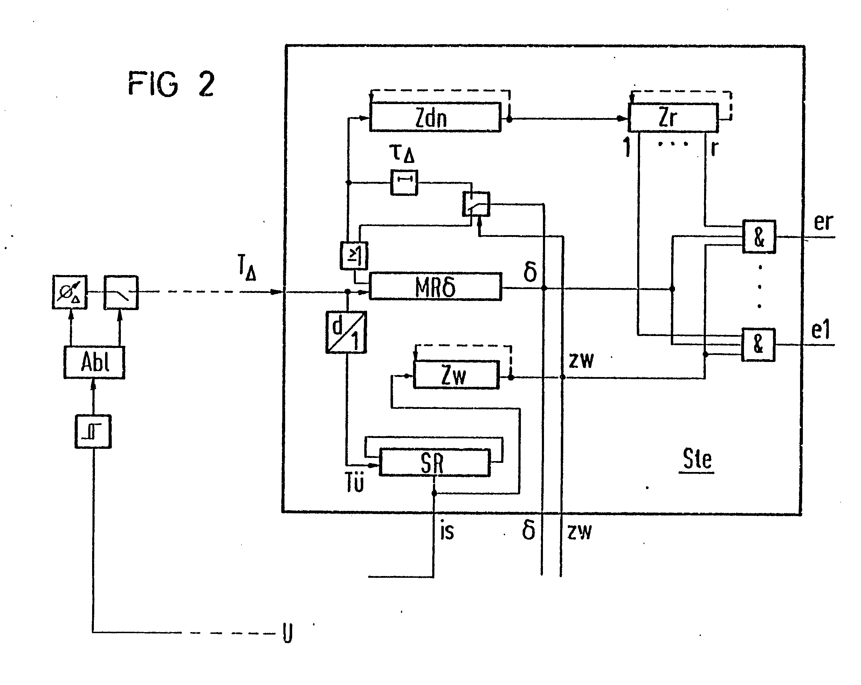

Der im vorstehend erläuterte Ablauf der Einspeicherung von zunehmend zur Verfeinerung der Störsignalkompensation beitragenden Teilkompensationssignalen in den mit den Umlauf-Schieberegistern UR1 ; ... ; URr aufgebauten Kompensationssignalspeicher KS kann, wie dies auch in Fig. 1 angedeutet ist, durch eine entsprechende Steuereinrichtung Ste gesteuert werden. Fig. 2 läßt nun in schaltungstechnischen Einzelheiten erkennen, wie eine solche Steuereinrichtung Ste aufgebaut sein kann.

Gemäß Fig. 2 weist die Steuereinrichtung Ste zunächst ein zu einem Umlaufspeicher geschlossenes, mit dem Abtasttakt $T_\Delta$ taktgesteuerten Schieberegister MRδ auf, dessen Länge mit $\tau_\Delta \cdot d \cdot n$. gleich der Länge der einzelnen Umlauf-Schieberegister UR1 ; ... ; URr (in Fig. 1) ist und in dem durch eine umlaufende Bitmarke der jeweilige Abtastzeitpunkt für die Abtastung eines gerade auftretenden Echo- u./o. Übersprechsignals markiert ist ; dieser Abtastzeitpunkt, zu dem der Entscheider E (in Fig. 1) von der Steuereinrichtung Ste entriegelt wird, wird durch das Auftreten der Bitmarke auf der Ausgangsleitung δ des — synchron zu den Umlauf-Schieberegistern UR1 ; ... ; URr (in Fig. 1) betriebenen — Markierregisters MRδ angezeigt. In den Rückführungszweig des Markierregisters MRδ kann ein Verzögerungsglied von der Abtastschrittlänge $\tau_\Delta$ eingeschaltet werden, um die Bitmarke um einen Schritt zu verschieben und damit den im einheitlichen Abtastraster jeweils nachfolgenden Abtastzeitpunkt zu markieren. Eine solche Verschiebung der Bitmarke und damit des Abtastzeitpunktes wird jeweils bei Auftreten eines Ausgangssignals auf der Ausgangsleitung zw eines Wiederholungszählers Zw ausgelöst.

Dieser Wiederholungszähler Zw wird jeweils bei Auftreten eines isolierten Sendesignalimpulses um einen Zählschritt weitergeschaltet, wozu er mit seinem Zähleingang an die Ausgangsleitung is der Steuereinrichtung Ste angeschlossen ist. Die Zählkapazität des Wiederholungszählers Zw entspricht der gewünschten Anzahl von Wiederholungen der Einschreibung eines Teilkompensationssignals in ein Umlauf-Schieberegister UR1 ; ... (in Fig. 1) vor dem Einschreiben eines Teilkompensationssignals in das jeweils nachfolgende Umlauf-Schieberegister ... ; URr (in Fig. 1) ; bei Verzicht auf solche (oben näher erläuterten) Wiederholungen kann der Wiederholungszähler Zw entfallen.

Die erwähnten Steuereinrichtungs-Ausgangsleitung is, deren Aktivierung das Auftreten eines isolierten Sendesignalimpulses im Vierdrahtleitungs-Sendezweig VS auslöst, kann die Ausgangsleitung eines weiteren Umlauf-Schiebegisters SR von der Länge $\tau_\Delta \cdot d \cdot n$ der zuvor erwähnten Umlauf-Schieberegister UR1 ; ... ; URr (in Fig. 1) und MRδ (in Fig. 2) sein, in welchem ein einziges « 1 »-Bit im Übertragungstakt $T_{\ddot{u}}$

taktgesteuert umläuft ; in Fig. 2 ist dazu angedeutet, daß der Übertragungstakt $T_{\ddot{u}}$ eines Taktfrequenzuntersetzers d/1 aus dem Abtasttakt $T_{\Delta}$ abgeleitet sein kann.

Des weiteren ist in der Steuereinrichtung Ste nach Fig. 2 ein Speicherzellen-Zähler Zdn vorgesehen, der jeweils bei einer Verschiebung der im Markierregister MRδ gespeicherten Bitmarke — und damit bei Verschebung des Abtastzeitpunktes um einen Abtastschritt $\tau_{\Delta}$ — einen Zählimpuls erhält und dessen Zählkapazität d · n der Länge der Umlauf-Schieberegister UR1 ; ... ; URr (in Fig. 1) entspricht ; dieser Speicherzellen-Zähler Zdn gibt jeweils bei Erreichen seines letzten Zählschrittes einen Zählimpuls an einen Umlaufspeicher-Zähler Zr ab. An die Zählausgänge 1 ... r dieses Umlaufspeicher-Zählers Zr sind mit ihrem jeweils einen Eingang UND-Glieder angeschlossen, die jeweils mit zwei weiteren Eingängen an der Ausgangsleitung δ des Markierregisters MRδ und an der Ausgangsleitung zw des Wiederholungszählers Zw liegen und deren Ausgänge e1 ... er zu den Steuereingängen der Einschreibschalter E1 ; ... ; Er der Umlauf-Schieberegister UR1 ; ... ; UR (in Fig. 1) führen.

An demjenigen der Ausgänge e1 ; ... ; er der Steuereinrichtung Ste, der zu dem jeweils von Umlaufspeicher-Zähler Zr bezeichneten Umlauf-Schieberegister UR1 ; ... ; URr (in Fig. 1) führt, tritt dann jeweils nach Erschöpfung der Zählkapazität des Wiederholungszählers Zw ein Steuerimpuls gerade zu demjenigen von dem synchron zu den Umlauf-Schieberegistern UR (in Fig. 1) arbeitenden Markierregiers MRδ markierten Zeitpunkt auf, zu dem im Verlauf des sukzessiven Einschreibens eines Teilkompensationssignals in das bezeichnete Umlauf-Schieberegister UR (in Fig. 1) das nächste Δ-Bit in die nächste· Speicherzelle dieses Umlauf-Schieberegisters vom Vorwärts-Rückwärts-Zähler VRZ (in Fig. 1) her einzuschreiben ist.

Die im Abtasttakt $T_{\Delta}$ arbeitende Steuereinrichtung Ste kann, wie dies in Fig. 2 noch angedeutet ist, vorzugsweise jeweils bei einem Anschalten der (Fern-) Speisespannung U an das Digital-Fernmeldesystem bzw. an die darin enthaltene Übertragungsschaltung Ü (in Fig. 1) etwa mit Hilfe einer von der Speisespannung U beaufschlagten Schwellwertschaltung angelassen werden, die bei ihrer Aktivierung einen Anlaßimpuls an eine die Erzeugung des Abtasttaktes $T_{\Delta}$ steuernde Ablaufsteuerung Abl abgibt. Dabei kann, wie dies ebenfalls in Fig. 2 angedeutet ist, die Ablaufsteuerung Abl bei bekannten Empfangssignaltakt des Digital-Fernmeldesystems nach Fig. 1 den Abtasttakt auch variieren, so daß bei der Δ-Codierung die Abtastschrittweite $\tau_{\Delta}$ in der näheren Umgebung der Entscheidungszeitpunkte für Empfangssignalimpulse kleiner ist als in der Mitte zwischen zwei solchen Entscheidungszeitpunkten.

Um nun wieder auf die Zeichnung Fig. 1 zurückzukommen, so ist dort die Bewertungs- und Additionsschaltung ADD mit einem die D/A-Wandlung der Teilkompensationssignale bewirkenden Widerstandsnetzwerk mit von Umlauf-Schieberegister UR1 ; ... ; zu Umlauf-Schieberegister ... ; URr abgestuften Widerstandswerten (R1, ... Rr) vorgesehen. Es sei aber besonders bemerkt, daß alternativ dazu die Bewertungs- und Additionsschaltung zur D/A-Wandlung der Teilkompensationssignale auch ein Schalt-Kondensator-Netzwerk mit von Umlauf-Schieberegister zu Umlauf-Schieberegister abgestuften Kapazitätswerten aufweisen kann. D/A-Wandler mit Schalt-Kondensator-Netzwerken sind (beispielsweise aus Nachrichtentechnik). Elektronik 31 (1981) 3, 92 ... 94, Bild 3) prinzipiell bekannt, so daß hier insoweit von weiter ins Einzelne gehenden Erläuterungen abgesehen werden kann.

Ferner sei noch bemerkt, daß es auch möglich ist, die Einschreibung des Teilkompensationssignals in das letzte Umlauf-Schieberegister URr ständig zu wiederholen. Der im Vierdrahtleitungs-Empfangszweig VE vorhandene, im laufenden Betrieb das empfangene Nutzsignal auswertende Entscheider E kann bei einer solchen permanenten Erneuerung des im letzten Umlauf-Schieberegister URr gespeicherten Teilkompensationssignals nicht gleichzeitig als Δ-Codierer mitausgenutzt werden ; hierfür ist dann vielmehr ein eigener Komparator erforderlich. Der Einfluß des bei einer permanenten Erneuerung des im letzten Umlauf-Schieberegisters URr gespeicherten Teilkompensationswortes, bei der das jeweils bisherige Teilkompensationssignalwort der Prädiktion dient, im laufenden Betrieb von der Gegenstelle her empfangenen Nutzsignals kann durch Verscrambeln des Sendesignals sowohl der eigenen Fernmeldestelle als auch in der Gegenstelle eliminiert werden : Beide Signale sind dann unkorreliert, so daß das von der Gegenstelle her empfangene Signal durch Mittelwertbildung im Vorwärts-Rückwärts-Zähler VRZ (in Fig. 1) herausfällt. Der Scrambler ist dabei so zu gestalten, daß während des Betriebes gelegentlich einzelne « 1 »-Bits in einer Umgebung von « 0 »-Bits auftreten ; dabei wird dann der Komparator des Δ-Codierers in einer den oben beschriebenen Vorgängen entsprechenden Weise zeitrichtig abgefragt.

Die Länge der Scrambler kann relativ kurz gehalten werden, wenn man das dem Entscheider E zugeführte Empfangssignal zugleich um die Entscheider-Arbeitszeit verzögert einem Subtrahierer zuführt, dem außerdem immer dann, wenn der Entscheider E einen Nutzsignalimpuls erkannt hat, eine Modellfunktion des Empfangssignals zugeführt wird, so daß im Subtrahierer diese Modellfunktion des Empfangssignals vom tatsächlichen Empfangssignal subtrahiert wird. Das verbleibende Restsignal kann dann wiederum Δ-codiert werden, wobei der Vorwärts-Rückwärts-Zähler VRZ (in Fig. 1) verhindert, daß Empfangs-Bitfehler und damit verknüpfte falsche Subtraktionen das Ergebnis stören.

Abschließend sei schließlich noch bemerkt, daß sämtliche Umlaufspeicher bzw. Umlaufregister bei einer Realisierung in C-MOS-Technik im Ruhezustand des Digital-Fernmeldesystems als Dauerspeicher wirken können, indem an ihnen eine abgesenkte Versorgungsspannung (bei vernachlässigbar geringer Stromaufnahme) aufrechterhalten wird.

**Patentansprüche**

1. Digital-Fernmeldesystem mit einer zwischen einem Vierdrahleitungs-Sendezweig (VS), insbesondere dem bei einer Gabelschaltung (G) ankommenden Vierdrahtleitungszweig, und einem Vierdrahtleitungs-Empfangszweig (VE), insbesondere von der Gabelschaltung (G) abgehenden Vierdrahtleitungszweig, vorgesehenen Übersprech- und/oder Echo-Kompensationsschaltung mit einem nach Maßgabe von im ankommenden Vierdrahtleitungszweig auftretenden Sendesignalimpulsen ansteuerbaren Kompensationssignalspeicher (KS), in den das Übersprech- und/oder Echosignal, das aus einem im ankommenden Vierdrahtleitungszweig auftretenden Sendesignalimpuls resultierend im abgehenden Vierdrahtleitungszweig auftritt, eingeschrieben ist, um daraus während einer Signalübertragung auf jeden Sendesignalimpuls hin als Kompensationssignal ausgelesen zu werden, dadurch gekennzeichnet, daß der Kompensationssignalspeicher (KS) eine Mehrzahl (r) von Umlauf-Schieberegistern (UR) jeweils mit einer Umlaufzeit gleich einem n-fachen (mit n = 1, 2, 3...) einer Übertragungssignal-Bitzeitspanne ($\tau_{ü}$) und einer entsprechenden Anzahl n von in jeweils einer Übertragungssignal-Bitzeitspanne ($\tau_{ü}$) entsprechenden Abständen aufeinanderfolgenden Ausgängen, die durch eine nachfolgende Bewertungs- und Additionsschaltung (ADD) zusammengefaßt sind, aufweist, in die im Verlauf einer Serie von isolierten Sendesignalimpulsen gewonnene Teilkompensationssignale eingeschrieben sind, wobei in das erste Umlauf-Schieberegister (UR1) das unmittelbar einem Sendesignalimpuls entsprechende Echo- und/oder Übersprechsignal quantisiert und codiert als Teilkompensationssignal eingeschrieben ist und in die nachfolgenden Umlauf-Schieberegister (..., URr) sukzessive jeweils das durch das (die) bereits in ein Umlauf-Schieberegister (UR1, ...) eingeschriebene(n) Teilkompensationssignal(e) teilkompensierte Echo- und/oder Übersprechsignal als weiteres Teilkompensationssignal eingeschrieben ist.

2. Digital-Fernmeldesystem nach Anspruch 1, dadurch gekennzeichnet, daß jeweils im Verlauf einer Teilserie von isolierten Sendesignalimpulsen jeweils einem Sendesignalimpuls entsprechende, ggf. bereits teilkompensierte, aufeinanderfolgende Echo- und/oder Übersprechsignale zu in einem jeweils gleichen Abtastraster aufeinanderfolgenden Abtastzeitpunkten abgetastet werden und die quantisierten Echo- und/oder Übersprechsignalwerte codiert sukzessive zur Bildung des jeweiligen Teilkompensationssignals in das jeweilige Umlauf-Schieberegister (UR) eingeschrieben werden.

3. Digital-Fernmeldesystem nach Anspruch 2, dadurch gekennzeichnet, daß jeweils eine Mehrzahl von aufeinanderfolgenden Echo- und/oder Übersprechsignalen zu ein und demselben Abtastzeitpunkt des jeweiligen Abtastrasters abgetastet wird und ein aus den Echo- und/oder Übersprechsignalwerten gebildeter Mittelwert codiert zur Bildung des jeweiligen Teilkompensationssignals in das jeweilige Umlauf-Schieberegister (UR) eingeschrieben wird.

4. Digital-Fernmeldesystem nach einem der Ansprüche 1 bis 3, dadurch gekennzeichnet, daß das Echo- und/oder Übersprechsignal Δ-codiert und in Form des so erhaltenen ΔM-Signals als Teilkompensationssignal in das jeweilige Umlauf-Schieberegister (UR) eingeschrieben wird.

5. Digital-Fernmeldesystem nach Anspruch 4, dadurch gekennzeichnet, daß die aufeinanderfolgend zu ein und demselben Abtastzeitpunkt des jeweiligen Abtastrasters gewonnene Mehrzahl von ΔM-Bits einem zunächst in Mittelstellung befindlichen Vorwärts-Rückwärts-Zähler (VRZ) zugeführt wird, dessen dabei erreichter, dem Echo- und/oder Übersprechsignal-Mittelwert entsprechender Zählerstand das zur Bildung des jeweiligen Teilkompensationssignals in das jeweilige Umlauf-Schieberegister (UR) einzuschreibende ΔM-Bit bestimmt.

6. Digital-Fernmeldesystem nach Anspruch 4 oder 5, dadurch gekennzeichnet, daß bei der Δ-Codierung die Abtastschrittweite ($\tau_\Delta$) in der näheren Umgebung der Entscheidungszeitpunkte für Empfangssignalimpulse kleiner ist als in der Mitte zwischen zwei solchen Entscheidungszeitpunkten.

7. Digital-Fernmeldesystem nach einem der Ansprüche 1 bis 6, dadurch gekennzeichnet, daß die Einschreibung eines Teilkompensationssignals in ein Umlauf-Schieberegister (UR1, ...) mindestens einmal wiederholt wird, bevor ein Teilkompensationssignal in das nachfolgende Umlauf-Schieberegister (..., URr) eingeschrieben wird.

8. Digital-Fernmeldesystem nach einem der Ansprüche 1 bis 7, dadurch gekennzeichnet, daß die Teilkompensationssignale jeweils bei einem Anschalten der (Fern-) Speisespannung an das Digital-Fernmeldesystem neu gebildet und eingespeichert werden.

9. Digital-Fernmeldesystem nach einem der Ansprüche 1 bis 8, dadurch gekennzeichnet, daß die Einschreibung des Teilkompensationssignals in das letzte Umlauf-Schieberegister (URr) ständig wiederholt wird.

10. Digital-Fernmeldesystem nach einem der Ansprüche 1 bis 9, dadurch gekennzeichnet, daß die einzelnen Umlauf-Schieberegister (UR) von unterschiedlicher Länge sind.

11. Digital-Fernmeldesystem nach einem der Ansprüche 4 bis 10, dadurch gekennzeichnet, daß als Δ-Entscheider zur Δ-Codierung ein im Vierdrahtleitungs-Empfangszweig (VE) ohnehin vorgesehener Empfangssignal-Amplitudenentscheider (E) mitausgenutzt wird und der Rückführungszweig des Δ-Codierers mit dem Kompensationssignalspeicher (KS) und der nachfolgenden Bewertungs- und Additionsschaltung (ADD) gebildet ist.

12. Digital-Fernmeldesystem nach einem der Ansprüche 1 bis 11, dadurch gekennzeichnet, daß die Bewertungs- und Additionsschaltung (ADD) ein Widerstands-Netzwerk (R1 ... Rr) mit von Umlauf-Schieberegister (UR1, ...) zu Umlauf-Schieberegister (... URr) abgestuften Widerstandswerten aufweist.

13. Digital-Fernmeldesystem nach einem der Ansprüche 1 bis 11, dadurch gekennzeichnet, daß die Bewertungs- und Additionsschaltung (ADD) ein Schalt-Kondensator-Netzwerk mit von Umlauf-Schieberegister (UR1, ...) zu Umlauf-Schieberegister (..., URr) abgestuften Kapazitätswerten aufweist.

## Claims

1. A digital telecommunications system comprising a crosstalk- and/or echo compensation circuit which is arranged between a four-wire line transmitting arm (VS), in particular the four-wire line arm incoming into a hybrid circuit (G), and a four-wire line receiving arm (VE), in particular the four-wire line arm outgoing from the hybrid circuit (G), and comprising a compensation signal store (KS) which can be operated in accordance with transmitted signal pulses occurring in the incoming four-wire line arm, where the crosstalk- and/or echo signal which occurs in the outgoing four-wire line arm as a result of a transmitted signal pulse occurring in the incoming four-line arm is input into the compensation signal store (KS) and, during a signal transmission, in response to each transmitted signal pulse, is read out therefrom as compensation signal, characterised in that the compensation signal store (KS) comprises a plurality (r) of circulating shift registers (UR), each of which has a circulation time equal to n-times (where n = 1, 2, 3 ...) a transmission signal bit time interval ($\tau_{\ddot{u}}$) and a corresponding number n of outputs which follow one another at intervals corresponding to a transmission signal bit time interval ($\tau_{\ddot{u}}$) and which are combined by a following evaluation- and addition circuit (ADD), into which circulating shift registers partial-compensation signals, obtained in the course of a series of isolated transmitted signal pulses, are input, where the echo- and/or crosstalk signal which directly corresponds to a transmitted signal pulse is input, in quantised and coded form, into the first circulating shift register (UR1) as partial-compensation signal and into the following circulating shift registers (..., URr) is input successively the respective echo and/or crosstalk signal, which has been sub-compensated by the partial-compensation signal(s) already input into a circulating shift register (UR1, ...), as further partial-compensation signal.

2. A digital telecommunications system as claimed in claim 1, characterised in that in the course of a sub-series of isolated transmitted signal pulses, consecutive echo- and/or crosstalk signals which each correspond to a transmitted signal pulse and have possibly already been partially compensated are sampled at sampling times which follow one another in an identical sampling pattern, and the quantised echo- and/or crosstalk signal values are successively input in coded form into the circulating shift register (UR) in question so as to form the relevant partial-compensation signal.

3. A digital telecommunications system as claimed in claim 2, characterised in that a plurality of consecutive echo- and/or crosstalk signals are each sampled at one and the same sampling time of the sampling pattern and a mean value, formed from the echo- and/or crosstalk signal values, is input in coded form into the circulating shift register (UR) in question so as to form the relevant partial-compensation signal.

4. A digital telecommunications system as claimed in one of the claims 1 to 3, characterised in that the echo- and/or crosstalk signal is Δ-coded and input into the circulating shift register (UR) in question in the form of the ΔM signal, obtained in this way, as partial-compensation signal.

5. A digital telecommunications system as claimed in claim 4, characterised in that the plurality of ΔM-bits, obtained consecutively at one and the same sampling time of the sampling pattern, are fed to a forwards-backwards counter (VRZ) which initially occupies the central position and whose count attained at this time, which corresponds to the echo- and/or crosstalk signal mean value, determines the ΔM-bit which is to be input into the circulating shift register (UR) in question so as to form the relevant partial-compensation signal.

6. A digital telecommunications system as claimed in claim 4 or 5, characterised in that in the Δ-coding, the sampling incrementation ($\tau_\Delta$) is smaller in the close vicinity of the decision times for received signal pulses than in the centre between two such decision times.

7. A digital telecommunications system as claimed in one of the claims 1 to 6, characterised in that the input of a partial-compensation signal into a circulating shift register (UR1, ...) is repeated at least once before a partial-compensation signal is input into the following circulating shift register (..., URr).

8. A digital telecommunications system as claimed in one of the claims 1 to 7, characterised in that the partial-compensation signals are reformed and input whenever the (remote)- feed voltage is connected to the digital telecommunications system.

9. A digital telecommunications system as claimed in one of the claims 1 to 8, characterised in that the input of the partial-compensation signal into the last circulating shift register (URr) is continuously repeated.

10. A digital telecommunications system as claimed in one of the claims 1 to 9, characterised in that the individual circulating shift registers (UR) differ in length.

11. A digital telecommunications system as claimed in one of the claims 4 to 10, characterised in that a received signal amplitude decision device (E), anyhow contained in the four-wire line receiving arm (VE), is co-exploited as Δ-decision device for the Δ-coding and the feedback arm of the Δ-coder is formed with the compensation signal store (KS) and the following evaluation- and addition circuit (ADD).

12. A digital telecommunications system as claimed in one of the claims 1 to 11, characterised in that the evaluation- and addition circuit (ADD) comprises a resistance network (R1 ... Rr), the resistance values of which are graduated from circulating shift register (UR1, ...) to circulating shift register (... URr).

13. A digital telecommunications system as claimed in one of the claims 1 to 11, characterised in that the evaluation- and addition circuit (ADD) comprises a switching capacitor network, the capacitance values of which are graduated from circulating shift register (UR1, ...) to circulating shift register (..., URr).

## Revendications

1. Système numérique de télécommunications comportant un circuit de compensation de la diaphonie et/ou des échos, prévu entre une branche d'émission (VS) d'une ligne quadrifilaire, notamment la branche d'une ligne quadrifilaire arrivant dans un termineur (G), et une branche de réception (VE) d'une ligne quadrifilaire, notamment une bande d'une ligne quadrifilaire partant du termineur (G), et comportant une mémoire (KS) des signaux de compensation, qui peut être commandée en fonction des impulsions des signaux d'émission apparaissant dans la branche de la ligne quadrifilaire d'arrivée et dans laquelle le signal de diaphonie et/ou d'écho, qui apparaît dans la branche de la ligne quadrifilaire de départ, en raison d'une impulsion du signal d'émission apparaissant dans la bande de la ligne quadrifilaire d'arrivée, est enregistré afin d'être lu, en tant que signal de compensation, hors de cette mémoire pendant une retransmission du signal lors de chaque impulsion du signal d'émission, caractérisé par le fait que la mémoire (KS) des signaux de compensation contient une multiplicité (r) de registres à décalage à circulation (UR) présentant respectivement une durée de circulation égale à n fois (avec n = 1, 2, 3 ...) un intervalle de temps ($\tau_{\bar{u}}$) d'un bit du signal de transmission, et un nombre correspondant n de sorties qui se succèdent à des intervalles de temps correspondant respectivement à un intervalle de temps ($\tau_{\bar{u}}$) d'un bit du signal de transmission et qui sont réunies dans un circuit aval d'évaluation et d'addition (ADD), dans lequel sont enregistrés des signaux de compensation partielle obtenus au cours d'une série d'impulsions isolées du signal d'émission, auquel cas le signal d'écho et/ou de diaphonie, qui correspond directement à une impulsion du signal d'émission, est enregistré dans le premier registre à décalage à circulation (UR) sous une forme quantifiée et codée en tant que signal de compensation partielle et le signal d'écho et/ou de diaphonie, qui est compensé partiellement par le ou les signaux de compensation partielle déjà enregistrés dans un registre à décalage à circulation (UR1, ...), est enregistré successivement en tant que signal supplémentaire de compensation partielle, dans les registres à décalage à circulation (..., URr) suivant.

2. Système numérique de télécommunications suivant la revendication 1, caractérisé par le fait que les signaux d'écho ou de diaphonie successifs, qui correspondent respectivement à une impulsion du signal d'émission respectivement au cours d'une série partielle d'impulsions isolées du signal d'émission et sont éventuellement déjà partiellement compensés, sont explorés à des instants d'exploration se succédant dans des trames respectivement identiques d'exploration, et les valeurs quantifiées du signal d'écho et/ou de diaphonie sont enregistrés successivement, sous forme codée, dans les registres à décalage de circulation respectifs (UR), pour former le signal respectif de compensation partielle.

3. Système numérique de télécommunications suivant la revendication 2, caractérisé par le fait que respectivement une multiplicité de signaux d'écho et/ou de diaphonie successifs sont explorés à un même instant d'exploration de trames respectives d'exploration et qu'une valeur moyenne formée à partir des valeurs du signal d'écho et/ou de diaphonie est enregistrée sous forme codée dans le registre à décalage à circulation respectif (UR), de manière à former le signal respectif de compensation partielle.

4. Système numérique de télécommunications selon les revendications 1 à 3, caractérisé par le fait que le signal d'écho et/ou de diaphonie est codé selon un codage Δ et est enregistré, sous la forme du signal ΔM ainsi obtenu, et en tant que signal de compensation partielle, dans le registre à décalage de circulation respectif (UR).

5. Système numérique de télécommunications suivant la revendication 4, caractérisé par le fait qu'une multiplicité de bits ΔM, qui sont obtenus à un même instant d'exploration des trames respectives d'exploration, sont envoyés à un compteur progressif/régressif (VRZ) situé tout d'abord dans sa position moyenne et dans l'état de comptage alors obtenu, qui correspond à la valeur moyenne du signal d'écho et/ou de diaphonie, déterminent le bit ΔM qui doit être enregistré dans le registre à décalage à circulation respectif (UR) pour former le signal respectif de compensation partielle.

6. Système numérique de télécommunications suivant la revendication 4 ou 5, caractérisé par le fait que, dans le cas du codage Δ, la durée ($\tau_\Delta$) du pas d'exploration au voisinage immédiate des instants de décision pour des impulsions du signal de réception est plus faible qu'à l'instant médian situé entre de tels instants de décision.

7. Système numérique de télécommunications suivant l'une des revendications 1 à 6, caractérisé par le fait que l'enregistrement du signal de compensation partielle dans un registre à décalage à circulation (UR1, ...) est répété au moins une fois, avant qu'un signal de compensation partielle soit enregistré dans le registre à décalage à circulation suivant (..., URr).

8. Système numérique de télécommunications suivant l'une des revendications 1 à 7, caractérisé par le fait que les signaux de compensation partielle sont à nouveau formés et enregistrés respectivement lors du raccordement de la tension d'alimentation (à distance) au système de télécommunications numériques.

9. Système numérique de télécommunications suivant l'une des revendications 1 à 8, caractérisé par le fait que l'enregistrement du signal de compensation partielle est répété de façon permanente dans le dernier registre à décalage à circulation (URr).

10. Système numérique de télécommunications suivant l'une des revendications 1 à 9, caractérisé par le fait que les différents registres à décalage à circulation (UR) possèdent des longueurs différentes.

11. Système numérique de télécommunications suivant l'une des revendications 4 à 10, caractérisé par le fait qu'on utilise simultanément comme dispositif de décision Δ servant à réaliser le codage Δ, un discriminateur (E) de l'amplitude du signal de réception, qui est prévu dans la branche de réception (VE) de la ligne quadrifilaire, et que la branche de retour revenant au codeur Δ est formée par la mémoire (KS) des signaux de compensation et par le circuit à aval d'évaluation et d'addition (ADD).

12. Système numérique de télécommunications suivant l'une des revendications 1 à 11, caractérisé par le fait que le circuit d'évaluation et d'addition (ADD) comporte un réseau de résistances (R1 ... Rr) possédant des valeurs résistives qui sont échelonnées d'un registre à décalage à circulation (UR1, ...) à un autre registre à décalage à circulation (..., URr).

13. Système numérique de télécommunications suivant l'une des revendications 1 à 11, caractérisé par le fait que le circuit d'évaluation et d'addition (ADD) comporte un réseau de condensateurs de commutation possédant des valeurs capacitives échelonnées d'un registre à décalage à circulation (UR1, ...) à un autre registre à décalage à circulation (..., URr).

FIG 1

FIG 2